# EUROPÄISCHE PATENTSCHRIFT

(11) **EP 2 995 414 B1**
(45) Veröffentlichungstag und Bekanntmachung des Hinweises auf die Patenterteilung: **05.07.2017**
(21) Anmeldenummer: 15001164.1
(22) Anmeldetag: 21.04.2015
(51) Int. Cl.: B23K 26/323, B23K 26/244, B23K 103/10, B23K 103/12

(54) **STOFFSCHLÜSSIGE VERBINDUNG ZWISCHEN ALUMINIUM UND KUPFER SOWIE VERFAHREN ZUR HERSTELLUNG DERSELBEN**
STRONG CONNECTION BETWEEN ALUMINIUM AND COPPER AND METHOD FOR PRODUCING THE SAME
LIAISON DE MATIÈRE ENTRE ALUMINIUM ET CUIVRE ET SON PROCÉDÉ DE FABRICATION

(30) Priorität: 30.07.2014 DE 102014110777
(43) Veröffentlichungstag der Anmeldung: 16.03.2016
(73) Patentinhaber: Karlsruher Institut für Technologie, 76131 Karlsruhe (DE)
(72) Erfinder: Gietzelt, Thomas, 76137 Karlsruhe (DE); Eichhorn, Lutz, 76706 Dettenheim (DE); Wunsch, Torsten, 76356 Weingarten (DE)

(56) Entgegenhaltungen:
- EP-A1- 1 779 962
- WO-A1-2005/082569
- JP-A- 2010 075 967

## Beschreibung

Die Erfindung betrifft eine stoffschlüssige Verbindung zwischen Aluminium und Kupfer gemäß des ersten Patentanspruchs sowie ein Verfahren zur Herstellung derselben gemäß des sechsten Patentanspruchs.

Kupfer wie auch Aluminium sind gute elektrische Leiter und damit bevorzugt für elektrische Leitungen und elektrischen Verbindungen besonders interessant. Das Eigenschaftsprofil, die Einsetzbarkeit und die Vorteile dieser beiden Metalle sind jedoch nicht deckungsgleich. Kupfer ist beispielsweise schwerer und teurer, aber auch thermisch und chemisch beständiger als Aluminium, weswegen insbesondere bei Anwendungen, bei denen größere Mengen an diesen Metallen erforderlich sind, wie z.B. bei Starkstromanwendungen, beide Materialien parallel eingesetzt werden.

Eine besondere Anwendung der vorgenannten Materialpaarung findet sich bei elektrochemischen Speichersystemen und da insbesondere bei Lithium-Ionenbatterien. In diesen müssen beispielsweise beim Verschalten von mehreren Li-Ionen-Einzelzellen deren Leiterfahnen aus Aluminium an Ableiter oder Stromleitschienen aus Kupfer dauerhaft angebunden werden.

Aluminium und Kupfer lassen sich jedoch nicht ohne weiteres stoffschlüssig miteinander verbinden. Problematisch ist vor allem die spontane Bildung einer sehr beständigen und hochschmelzenden Passivschicht aus Aluminiumoxid auf Aluminiumoberflächen, welche sich nach Entfernung spontan neu bildet. Sie ist, im Gegensatz zu Titan und Titanoxid, im Grundwerkstoff unlöslich. Einerseits bedingt sie die gute Korrosionsbeständigkeit von Aluminiumlegierungen, führt andererseits aber zu Anbindungsproblemen und Übergangswiderständen beim Schweißen.

Hinzu kommen die großen Unterschiede in dem thermischen Ausdehnungsverhalten sowie in der Schmelztemperatur sowie die Neigung zur Bildung von Mischkristallen und intermetallischer Phasen im System Kupfer/Aluminium mit wiederum anderen mechanischen, elektrischen und thermischen Eigenschaften, die eine Bildung von Eigenspannungen und lokalen elektrischen Widerständen in einer stoffschlüssigen Verbindung signifikant fördert.

Geläufige Lösungen sehen daher insbesondere formschlüssige oder kraftschlüssige Verbindungen vor, wie z.B. plastische verformte Verbindungen, Klemmverbindungen oder Schraubverbindungen.

Dennoch sind stoffschlüssige Verbindungen von Kupfer und Aluminium sowie Verfahren zur Herstellung dieser bekannt. Üblicherweise nutzen diese Lösungsansätze Kontaktverbindungen mittels Ultraschall- öder Punktschweißen.

Insbesondere das Verbinden von Aluminiumableitern ist bisher in der Technik nicht zufriedenstellend gelöst. Das Verbinden mittels Ultraschallschweißen kann zu Einkerbungen am Übergang zum nicht verschweißten Bereich und dort zu Brüchen führen. Je nach Ausprägung der Passivschicht kann die Qualität der elektrisch leitenden Verbindung schwanken. Die Qualität von Punktschweissungen kann abhängig von Prozessparametern und Zustand des zu verschweißenden Materials sehr ungleichmäßig sein und zu unterschiedlichen Übergangswiderständen führen

Beispielsweise offenbart die **[1]** ein Verfahren zum Schweißen von Aluminium-Kupfer-Verbindungen mittels Schweißlaser. Vor einem Verschweißen wird ein Zusatzwerkstoff, vorzugsweise Nickel oder Silber, alternativ auch Zinn oder Zink zwischen die zu fügenden Flächen aus Kupfer oder Aluminium vorzugsweise als Folie oder Beschichtung eingebracht. Der Zusatzwerkstoff agiert bei einem Verschweißen als angereicherte Schmelze zwischen beiden Fügepartnern, wobei er zu beiden Fügepartnern einerseits eine erhöhte. Löslichkeit aufweist, andererseits einen direkten Kontakt dieser behindert und auch die Bildung von intermetallischen Phasen reduziert.

Dieser Vorschlag ist für eine Schweißverbindung zwischen einer vergleichsweise massiven Kupferschiene von mehreren Millimetern Stärke (z.B. 2 bis 5 mm) und einem dünnen Aluminiumableiter einer Lithium-Ionenbatterie mit vergleichsweise geringer Stärke im Bereich von 0,1 bis 0,5mm nicht zuverlässig. Aluminium zählt mit einer Schmelztemperatur von 660°C zu den niedrigschmelzenden Metallen, weist aber eine hohe Sauerstoffaffinität auf. Es weist folglich auf der Oberfläche eine fest haftende Passivschicht aus Al₂O₃ mit hoher Schmelztemperatur Tₛ = 2050°C auf. Trifft ein Laserstrahl von oben auf die dünne Aluminiumlage, schmilzt diese auf. Es bilden sich in der Aluminiumlage aufgrund der geringen Dicke des Aluminiumleiters sowie von Oberflächenspannungseffekten, der Passivschicht und aufgrund der deutlich geringeren Schmelztemperatur von Aluminium im Vergleich zu Kupfer (Tₛ = 1083°C) sofort Löcher. Eine reproduzierbare elektrische Verbindung guter Qualität wird folglich mit einem herkömmlichen Verfahren nicht möglich.

Eine weitere Problematik bei der Laserverschweißung von Werkstoffen mit guten elektrischen und thermischen Leitfähigkeiten liegt darin, dass - wie auch bereits in **[1]** beschrieben - diese Werkstoffe, insbesondere Kupfer, Wellenlängen im Infrarotbereich von Laserstrahlquellen stark reflektieren und nur zu einem geringen Teil absorbieren. Für eine Verschweißung müssen folglich hohe Laserenergien eingebracht werden, was bei Oberflächeninhomogenitäten und damit erzeugten lokalen Unterschieden im Absorptionsverhaltens der zu verschweißenden Flächen sehr schnell zu lokalen Überhitzungen führt. Bei Kupfer liegt ferner die Besonderheit vor, dass die Absorption temperaturabhängig ist bzw. beim Übergang zur Schmelze sehr stark ansteigt.

Für das Fügen von Aluminiumableitern von Li-Ionenbatterien sind außerdem dem Energieeintrag enge Grenzen gesetzt, da die Aluminiumableiter nur wenige Zentimeter aus der Li-Ionenbatterie herausragen. Am Übergang in die Zelle befindet sich eine polymere Siegelnaht einer vakuumdichten Versiegelung, die die Chemie der Li-Ionenzelle vakuumdicht gegen die Umgebung abschirmt und vor Oxidation schützt. Diese Siegelstelle darf nur kurz Temperaturen von max. 80°C ausgesetzt werden, damit die Vakuumdichtheit erhalten bleibt.

JP-A-2010075967 offenbart einen Cu-Al-Edelstahl Schichtverbund. EP-A-1779962 offenbart einen Cu-Al Schichtverbund, hergestellt mittels Laserpunktschweissen. WO-A-2005/082569 offenbart einen Cu-Ni-Al Schichtverbund hergestellt mittels Laserpunktschweissen. Davon ausgehend liegt eine **Aufgabe der Erfindung** darin, eine stoffschlüssige und rissarme Verbindung zwischen unterschiedlichen Ableitermaterialien, insbesondere von Aluminiumableiter und Stromleitschienen aus Kupfer in Li-Ionen-Batteriesystemen vorzuschlagen.

Eine weitere Aufgabe der Erfindung liegt darin, ein Verfahren zur Herstellung der vorgenannten Verbindung vorzuschlagen, das sich durch sehr hohe Schweißgeschwindigkeiten und einer großen Freiheit hinsichtlich der für den jeweiligen Anwendungszweck erforderlichen Querschnitte der Verschweißungen und auch bezüglich Abständen zu temperatursensiblen Bereichen auszeichnet. Die Aufgabe wird mit einer stoffschlüssigen Verbindung zwischen Aluminium und Kupfer mit den Merkmalen des Anspruch 1 gelöst. Ferner wird die Aufgabe mit einem Verfahren mit den Merkmalen des Anspruchs 6 gelöst. Auf diese rückbezogene Unteransprüche geben vorteilhafte Ausgestaltungen wieder.

Zur Lösung der Aufgabe wird eine stoffschlüssige Verbindung zwischen Aluminium und Kupfer, umfassend einen Schichtverbund aus einem Kupferelement, einer Aluminiumschicht, vorzugsweise einem Aluminiumblech, und einer auf dieser aufliegenden Kupferschicht, vorzugsweise eine Folie oder eine Schichtung (z.B. Partikelschüttung) auf der Aluminiumschicht vorgeschlagen.

Die aufliegende Kupferschicht ist im Rahmen einer möglichen Ausgestaltung vernickelt. Eine Beschichtung der Kupferlagen mit Nickel mit Schichtdicken im bevorzugten Bereich von 1-30 µm dient der Beeinflussung der Legierungszusammensetzung des Schmelzbades durch Bildung einer ternären Legierung, wobei der Nickelanteil durch die vorgenannte Schichtdicke einstellbar ist. Nickelschicht verbessert im Vergleich zu unbeschichtetem Kupfer auch die Einkopplung der Festkörper-Laserstrahlung und damit das Absorptions-Reflexionsverhältnis signifikant.

Ferner dient ein Verfahren zur Herstellung der vorgenannten stoffschlüssigen Verbindung zwischen Aluminium und Kupfer der Lösung der Aufgabe. Es umfasst eine Bereitstellung der zu verschweißenden Komponenten, d.h. ein Kupferelement, eine Aluminiumschicht und eine Kupferschicht, die in genannter Reihenfolge zu einem Schichtverbund gestapelt werden. Es folgt ein lokales Verschweißen von Kupferelement, Aluminiumschicht und Kupferschicht unter Einwirkung einer Wärmequelle unter Bildung einer Schweißnaht, die sich durch die Kupferschicht und die Aluminiumschicht in das Kupferelement erstreckt, wobei die Wärmequelle auf der Kupferschicht einwirkt. Vorzugswiese erfolgen die Einwirkung der Wärmequelle und der Vorgang des Verschweißens unter einer Schutzgasatmosphäre, vorzugsweise mit Argon oder Stickstoff.

Die lokale Verschweißung erstreckt sich auf den Einwirkbereich der Wärmequelle auf und unter der Kupferschicht. Im Falle einer Punktverschweißung erfolgt eine punktuelle Einwirkung und Verschweißen. Vorzugsweise erfolgt das lokale Verschweißen durch ein serielles Einwirken der Wärmequelle entlang einer Schweißlinie (Schweißrichtung) auf der Kupferschicht, wobei die den Schichtverbund durchdringende Schweißnaht entlang dieser Schweißlinie folgt. Weiter bevorzugt erfolgt eine Vergrößerung des Schweißnahtquerschnitts dadurch, dass die Wärmequelle auf der Kupferschicht nicht nur entlang einer Linie bewegt und/oder seriell positioniert wird, sondern auch durch eine Ablenkung der Wärmequelle quer zur Schweißrichtung erfolgt. Die Schweißlinie wird vorzugsweise zyklisch (vorzugsweise sinusförmig oder zick-zack-förmig) um eine Mittellinie abgelenkt. Die genannte Ablenkung ist in ihrer Frequenz einstellbar, was unter Nutzung des Zusammenhangs zwischen Einwirkdauer der Wärmequelle und Tiefe der Schweißnaht wiederum zur Einstellung der Einschweißtiefe der Schweißnaht nutzbar ist. Die Amplitude dieser Ablenkung bestimmt ferner die laterale Ausdehnung der Schweißnaht auf der Kupferschicht und im Schichtverbund.

Die aufliegende Kupferschicht bzw. die Folie weist eine Dicke von vorzugsweise 0,1 - 5mm, weiter bevorzugt 0,2 - 1,0mm auf. Die niedrigschmelzende Aluminiumlage ist beidseitig durch ein bei deutlich höheren Temperaturen schmelzendem Kupfer eingeschlossen. Dies ermöglicht einerseits eine bessere Wärmeverteilung und Ableitung insbesondere über die oben liegende Kupferlage und reduziert damit auch die Wahrscheinlichkeit einer selektiven Überhitzung in der Aluminiumlage vor einer stofflichen Verbindung und behindert andererseits durch die abdeckende Kupferschicht als Gasbarriere eine ungehinderte Zuströmung von Sauerstoff oder anderen Gasbestandteilen und damit eine Oxidation oder eine andere Degradation der Aluminiumschicht. Eine Lochbildungsgefahr insbesondere im Aluminium durch lokale Überhitzung, Oxidation oder Degradation wird damit bei gleichzeitiger Herstellung einer stoffschlüssigen Verbindung zwischen Kuper- und Aluminiumbestandteile wirksam reduziert.

Die stoffschlüssige Verbindung erfolgt vorzugsweise mittels eines Schweißverfahrens, weiter bevorzugt durch ein kontaktloses Laserschweißverfahren. Dabei kommen vorzugsweise Scheiben- oder Faserlaser mit Leistungen von mehr als 1 kW zum Einsatz.

Es ist bekannt, dass Laserstrahlung von Festkörperlasern mit einer Wellenlänge von z.B. 1,06µm bei Raumtemperatur von Kupfer zu 95% reflektiert wird. Zudem ist die Reflexion von Kupfer sehr stark temperaturabhängig. Bei hohen Temperaturen und in Kupferschmelze nimmt die Einkopplung der Festkörperlaserleistung dramatisch zu. Daher wird die von einer Laserstrahlung direkt angestrahlte Kupferschicht vorzugsweise vernickelt oder verchromt, was das Einkoppelproblem mindert.

Eine bevorzugte zusätzliche Schicht aus Nickel, hilfsweise auch aus Chrom, Silber oder Gold auf der direkt von einer Laserstrahlung beaufschlagen Kupferschicht, d.h. auf der Oberfläche abseits der Aluminiumschicht reduziert den Reflexionsanteil zugunsten der für eine. Wärmeeinkopplung günstigen Absorptionsanteil. Die zusätzliche Schicht ist vorzugsweise eine stoffschlüssige Beschichtung der Kupferschicht (vorzugsweise durch galvanische oder stromlose Abscheidung aus Lösungen, Aufdampfen oder Aufsputtern, hilfsweise mit Dickfilmtechnik), was eine direkte Weiterleitung der absorbierten Laserstrahlung als Wärme in die Kupferschicht bewirkt. Eine alternative Gestaltung sieht vor, die zusätzliche Schicht als Folie aufzulegen (d.h. keine oder nur über Verbindungsstoffe wie Lote oder Haftvermittlerschichten, hilfsweise auch organische Schichten wie Klebstoffe mittelbar stoffschlüssige Verbindung), was zwar den Absorptionsanteil der Laserstrahlung und damit die Erzeugung an Wärme im Schichtverbund erhöht, jedoch die Weiterleitung der genannten Wärme auf Strahlungswärme und/oder Wärmeleitung auf die unmittelbaren Auflagerflächen reduziert, d.h. verschlechtert.

Die zusätzliche Schicht dient dabei neben einer Neigung der einfallenden Laserstrahlung um bevorzugt zwischen 2 und 10°, weiter bevorzugt zwischen 3 und 5° gegenüber der Orthogonalen zur Schichtoberfläche auch der Vermeidung von Rückreflexion der Laserstrahlung und damit z.B. Beschädigung der Lichtleitfasern von insbesondere Faserlasern von Festkörperlasern.

Die Schweißgeschwindigkeit erfolgt im Falle einer kontinuierlichen Verschweißung mit einer bevorzugten Schweißvorschubgeschwindigkeit von bevorzugt 0,1 bis 10m/s, weiter bevorzugt zwischen 1 und 5m/s, die Ablenkung des Laserstrahls quer zur Schweißrichtung mit bevorzugten Frequenzen zwischen 20 und 1000 Hz, weiter bevorzugt zwischen 100 und 500Hz. Die Führung des Laserstrahls entlang der Schweißlinie sowie die Ablenkung desselben quer zur Mittellinie erfolgt durch Zusatzeinrichtungen wie z.B. Spiegelanordnungen in einem Scanner.

Ausreichende Anbindungsquerschnitte für eine hohe Stromtragfähigkeit einer elektrischen Kontaktstelle beispielsweise für eine stromleitende Schweißverbindung in einer Li-Ionen-Batterie lassen sich erreichen, indem der Laserstrahl quer zur Schweißrichtung abgelenkt wird und somit eine breite Scheißnaht entsteht.

Zu hohe Ablenkungsfrequenzen und Schweißgeschwindigkeiten reduzieren ferner den für die Verschweißung erforderlichen Wärmeeintrag für ein lokal begrenztes Aufschmelzen der Werkstoffschichten. Das Verhältnis aus Aufheiztemperatur zu eingetragener Wärmemenge ist besonders hoch, wenn der Wärmeeintrag mit hoher Energiedichte, jedoch nur kurzzeitig und lokal eng begrenzt erfolgt. Dabei wird der Zusammenhang genutzt, dass eine schnelle Erwärmung des Schichtverbunds über die Schmelztemperatur den angestrahlten Bereich noch vor einer Wärmeableitung in umgebende Bereiche aufschmilzt. Bei einem nur kurzzeitigen Wärmeeintrag erfolgt eine Aufnahme der eingetragen Wärmemenge bei der unmittelbar nach dem Aufschmelzen wieder eingeleiteten Abkühlung insbesondere durch den Phasenübergang bei der Erstarrung in der Schweißnaht. Dies reduziert grundsätzlich die thermische Belastung im Umfeld der Verschweißung. Eine Voraussetzung dafür ist die Verwendung kleiner Lichtleitfasern zwischen 10 bis 200µm, typischer Weise bis 100 oder bis 50µm Durchmesser oder noch kleinerer Durchmesser bei Faserlasern. Der Durchmesser der Lichtleitfaser sollte kleiner sein als die zu erzielende Einschweißtiefe, um die thermische Belastung des Nahtbereichs gering zu halten und die Einschweißtiefe bei geringer Dicke des mehrlagigen Aufbaus exakt steuern zu können. Für sehr dünne, aus mehreren Lagen aufgebaute Schweißnähte empfiehlt sich daher ein Lichtleitfaserdurchmesser von max. 100µm.

Somit lassen sich Schweißnähte vorteilhaft näher an temperatursensible Komponenten wie z.B. an einer Batteriezelle mit einer vakuumdichten polymeren Versiegelung am Beispiel einer Li-Ionen-Batterie positionieren.

Eine Ausgestaltung sieht vor, zusätzlich zu den vorgenannten Ablenkungsfrequenzen und Schweißgeschwindigkeiten die Laserstrahlung pulsweise vorzusehen, entweder mittels eines gepulsten Lasers oder mit Mitteln zur Ablenkung und/oder Abschattung wie z.B. Spiegelelemente und/oder Blenden. Durch diese Pulsierung lassen sich insbesondere auch Punktverschweißungen in vorgenannter Weise optimieren, insbesondere durch eine Erhöhung des vorgenannten Verhältnisses aus Aufheiztemperatur zu eingetragener Wärmemenge. Durch diese kurzzeitigen Einstrahlungen mit hoher Energie lässt sich auch das Gefüge, insbesondere die Legierungsbildung und den Gefügaufbau allgemein sowie die Korngröße im Speziellen optimieren.

Ein Laserschweißen ermöglicht die effiziente Herstellung stoffschlüssiger Verbindungen unterschiedlichster Metallkombinationen ohne einen kraftschlüssigen oder formschlüssigen Festkörperkontakt wie z.B. eine Verschraubung. Je nach Materialkombination, Schmelztemperatur und Wärmeleitfähigkeit kommen unterschiedliche Leistungsdichten der auf einen Schweißpunkt fokussierten'Laserstrahlen, vorzugsweise eines einzigen Laserstrahls zum Einsatz.

Die beschriebene Erfindung löst die Verbindungsprobleme dünner Leitfahnen insbesondere aus Aluminium, wie sie als Leitfahnen an Li-Ionen-Batterien zu finden sind, mit massiven Stromleitschienen aus Kupfer zur Erzielung hoher Spannungen oder Stromstärken von Li-Ionen-Batterieeinheiten (Stacks). Die leitenden Verbindungen bestehen prinzipbedingt aus den beiden genannten verschiedenen Materialien Aluminium und Kupfer, wobei letzteres vorzugsweise vernickelt ist. Die Verschaltung mehrerer Li-Ionen-Zellen mit diesen Verbindungen dient der Verschaltung von Einzelzellen ohne eine herkömmliche mechanische Verschraubung oder eine Ultraschallverschweißung. Bei einer mechanischen Verbindung ist mit Alterungserscheinungen und einem Anwachsen des Übergangswiderstandes, insbesondere bei Aluminium durch Verstärken der Passivschicht oder plastisches Fließen, zu rechnen. Eine Ultraschallverschweißung muss eine ausreichende stoffschlüssige und rissfreie Verbindung mit dem jeweils erforderlichen Querschnitt sicherstellen. Insbesondere bei geringen Ableiterstärken besteht jedoch vor allem am Übergang des eingesetzten US-Stempels an der Auflagefläche auf der Blechoberfläche eine erhöhte Rissbildungsgefahr, was einer dauerfesten, vibrationsbeständigen Verbindung, wie sie z.B. im Fahrzeugbereich zwingend erforderlich ist, entgegenwirkt.

Bei einem Einsatz in einer Li-Ionen-Zelle betragen die bevorzugten Materialstärken 2 bis 5mm für die Stromleitschienen aus Kupfer (Kupferelement) sowie 0,1 bis 0,5mm für die darauf angeordneten Aluminiumschicht und Kupferschicht (z.B. als Folien).

Durch Überdeckung der Aluminiumschicht wie z.B. ein AluminiumAbleiter mit einem gut schweißbaren Material hier wie z.B. vernickeltes Kupfer, wird die Lochbildung, wie sie beim alleinigen Anschweißen von Aluminium-Ableitern auf dem Kupferelement gemäß herkömmlicher Verfahren auftreten würde, verhindert. Es bildet sich entsprechend der Breite der Ablenkung z.B. des Laserstrahls und der Einschweißtiefe bis in das Kupferelement aufgrund einer Durchmischung der Schmelze sowie deren Rascherstarrung insbesondere bei hohen Schweißgeschwindigkeit oberhalb ca. 2 m/s beim Laserschweißen eine ternäre Legierung aus Kupfer, Aluminium und Nickel aus. Diese nickelhaltige Legierung reduziert gegenüber einer binären Legierung aus Aluminium und Kupfer die Rissbildungsgefahr in der Schweißnaht und begünstigt insbesondere bei Li-Ionen-Batterien eine zuverlässige stoffschlüssige Anbindunq von Aluminiumableitern an Kupferschienen.

Die Lösung der Aufgabe sowie Ausgestaltungen dieser werden anhand von Ausführurigsbeispielen mit den folgenden Figuren erläutert. Es zeigen
**Fig.1** eine schematische Schnittdarstellung eines Querschnittes eines Schichtverbunds aus einer Kupferschicht mit Nickelbe-, schichtung, einer Aluminiumschicht und einem Kupferelement sowie einer alle Elemente durchdringenden Schweißnaht,
**Fig.2** ein binäres Phasendiagramm Al-Cu sowie
**Fig.3** ein ternäres Phasendiagramm Al-Cu-Ni.

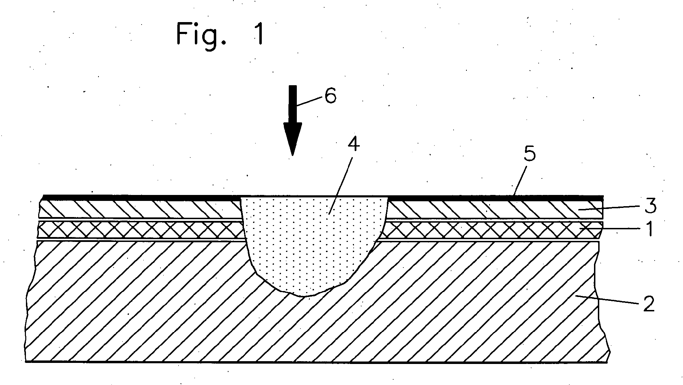

Die in **Fig.1** dargestellte Schnittdarstellung der vorgeschlagenen Schweißverbindung einer als Aluminumblech **1** ausgeführten Aluminiumschicht mit einem als Kupferplatte **2** ausgeführtem Kupferelement sowie einer auf dem Aluminiumblech als Kupferblech **3** aufgelegten Kupferschicht als Schichtverbund offenbart eine Schweißnaht **4,** die alle genannten Schichten des Schichtverbunds durchdringt. Dargestellt ist zudem eine Nickelbeschichtung **5** auf der Kupferschicht auf der der Aluminiumschicht abgewandten Seite der Kupferschicht. Sie begünstigt eine Absorption einer Laserstrahlung **6** auf die Kupferschicht in vorgenannter Weise.

Die dargestellte Schweißverbindung repräsentiert beispielhaft eine Verbindung für einen Aluminiumableiter mit einer Kupferleitschiene für eine Lithium-Ionen-Batterie für einen Einsatz in einem Kraftfahrzeug. Beispielhaft werden hierzu Materialstärken für das Aluminium- und das Kupferblech von jeweils 0,2mm, für die Kupferplatte von 2 bis 4mm und für die Nickelbeschichtung auf dem Kupferblech von 1 bis 50µm, bevorzugt von 5 bis 20µm genannt. Als Laser-Schweißparameter des einen Laserstrahls, mit denen der oben beschriebene dreilagige Materialaufbaus verschweißt wurde sind:
- Laserlichtleistung: P= 1,5 bis 3kW
- Schweißgeschwindigkeit: v = 1,5 bis 4m/min
- Fokuslage = -1mm
- Scanbreite 2 bis 4mm
- seitliche Ablenkfrequenz des Laserstrahls 200 bis 350Hz

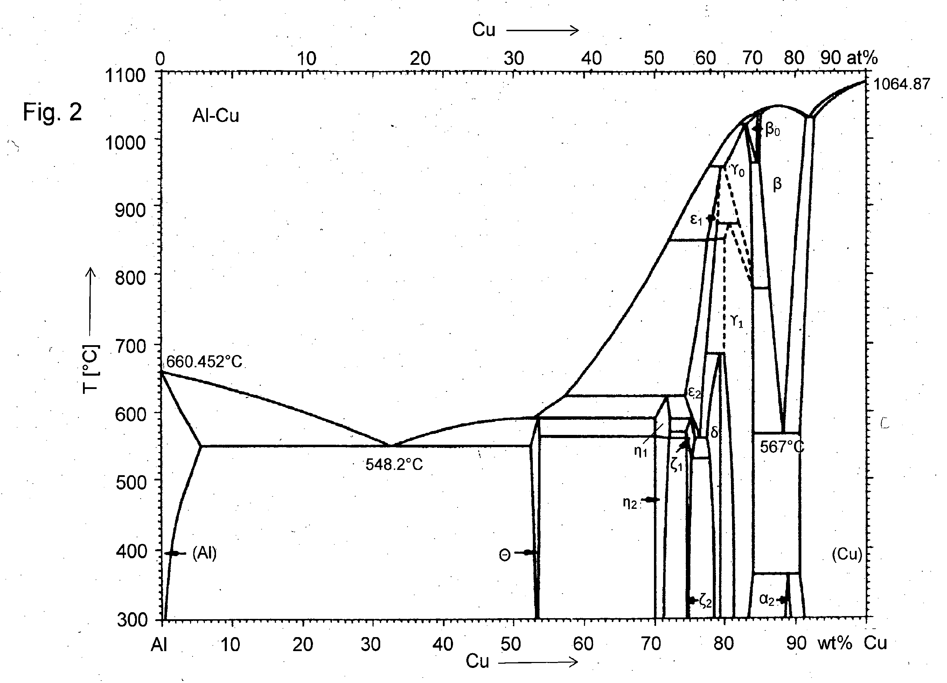

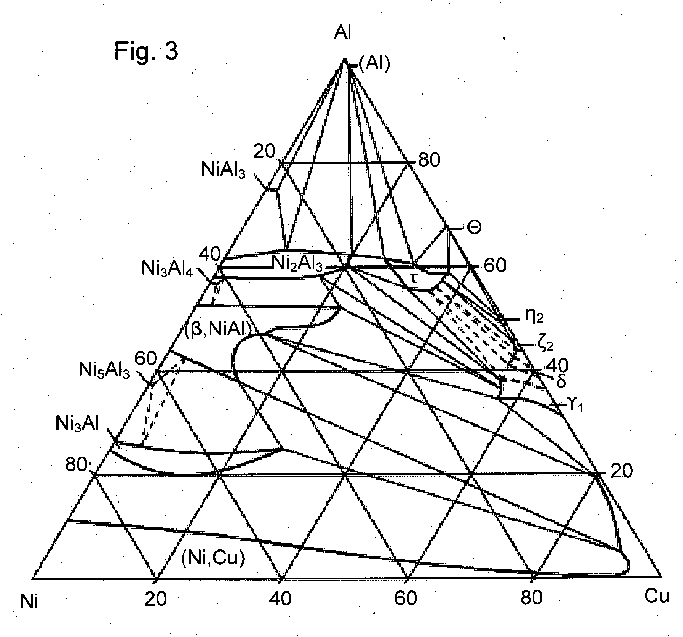

Als Nebeneffekt der Nickelbeschichtung bildet sich aus einer binären Legierung gemäß dem binären Phasendiagramm Al-Cu in **Fig.2** (vgl. **[2]**) eine ternäre Legierung aus den Metallen Al, Cu und Ni, deren Zusammensetzung von vorgenannten Materialstärken beeinflusst wird. **Fig. 3** zeigt das Phasendiagramm für das System Al-Cu-Ni **[3]**. Die Zusammensetzung der ternären Legierung lässt sich auch durch Steuerung der Einschweißtiefe in das Kupferelement, die Dicke der Vernickelung und die Dicke der Überdeckung des Aluminiumblechs mit der Kupferlage einstellen, so dass spröde Phasen vermieden werden bzw. durch die Dynamik der Schweißung eine angepasste Morphologie mit nur sehr dünnen Säumen spröder Phasen, vorzugsweise unter 5 µm, erreicht wird, die eine deutlich geringere Rissanfälligkeit aufweist.

Besondere Aufgaben bestehen in der Herstellung ausreichender Anbindungsquerschnitte für gute Stromtragfähigkeit sowie in der weitgehenden Vermeidung einer Bildung spröder, intermetallischer Phasen von Al und Cu im binären Phasensystem gem. **Fig.2****.** Um bei einer Ablenkfrequenz oberhalb 2 kHz ausreichende Mengen von Metallen mit hoher Wärmeleitfähigkeit aufschmelzen zu können, und um ein Schmelzbad, welches in der Tiefe alle drei Materiallagen umfasst, ausbilden zu können, muss die Schweißgeschwindigkeit in Schweißrichtung sehr langsam, im Bereich vorzugsweise zwischen 0,5 und 2 m/min gewählt werden. Dies begünstigt wiederum die Diffusion im festen Zustand und die Formierung spröder, intermetallischer Phasen im System Al-Cu. Der Anspruch besteht daher in der richtigen Wahl der folgenden Einflussgrößen:
- Energiedichte (definiert durch die Laserleistung, den Durchmesser des Lichtleitkabels und der Fokuslage bzgl.. der Oberfläche),
- der seitlich zur Schweißrichtung erfolgenden Auslenkung des Strahls bei ausreichend langer Verweilzeit, um ein ausreichend großes, alle Lagen umfassendes Schmelzbad erzeugen zu können, und
- einer Schweißgeschwindigkeit, die die Diffusion im festen Zustand so gering hält, dass sich keine breiten Säume intermetallischer Phasen ausbilden können.

Bekannt ist, dass im binären Phasendiagramm Al-Cu zahlreiche spröde intermetallische Phasen auftreten. Die Schweißgeschwindigkeit bzw. Dauer, in der Material aufgeschmolzen vorliegt, beeinflusst die Menge, Verteilung und Morphologie der entstehenden intermetallischen Phasen signifikant. Eine zu lange Aufschmelzdauer und hohe Durchmischung führen dazu, dass die entstehenden Phasen sich denen der für das thermodynamische Gleichgewicht geltenden im binären Phasendiagramm annähern. Ungleichgewichtszustände, die sich durch die mögliche hohe Schweißgeschwindigkeit erzielen und einfrieren lassen, gehen zunehmend verloren.

Untersuchungen der Schweißnähte erfolgten lichtmikroskopisch anhand von Schliffbildern für verschiedene Parametervariationen. Zur näheren Untersuchung wurden die Proben poliert und geätzt.

Mit einer Laserlichtleistung von P = 2kW, einer Fokuslage 1mm im Material, einer Schweißgeschwindigkeit v = 3m/min, einer Ablenkfrequenz von 250 Hz sowie einer Scanbreite von 2,5mm wurde keine ausreichende Einschweißtiefe bis in das Kupferelement erzielt. Es erfolgte eine Rissbildung aufgrund einer Legierungszusammensetzung ohne eine ausreichende Einmischung von Nickel in der Schmelze. Ein ähnliches Ergebnis, jedoch mit einer erhöhten Rissbildung wurde auch mit einer Laserlichtleistung von P = 1,5kw, einer Fokuslage 1mm im Material, einer Schweißgeschwindigkeit v = 3m/min, einer Ablenkfrequenz von 200 Hz sowie einer Scanbreite von 3,0mm erzielt.

Ein gute praktisch rissfreie oder rissarme Schweißnaht mit ausreichender Schweißtiefe wurde mit den vorgenannten Laserlichtleistungen und Fokuslagen im Material erzielt, wenn die Schweißgeschwindigkeiten auf v = 1,5m/min reduziert und die Ablenkfrequenzen auf 300Hz erhöht und die Scanbreiten dabei auf 2mm reduziert werden. Auch mit einer Laserlichtleistung von P = 2,5kW wurde bei diesen Parametern eine rissfreie Schweißnaht mit ausreichender Einschweißtiefe (Schweißtiefe) erzielt.

Mit einer Laserlichtleistung von P = 3kW, einer Fokuslage 1mm im Material, einer Schweißgeschwindigkeit v = 4m/min, einer Ablenkfrequenz von 200 Hz sowie einer Scanbreite von 4,0mm wurde eine Reduktion der Einschweißtiefe gegenüber der vorgenannten Einstellung trotz höherer Leistung aufgrund größerer Scanbreite und Schweißgeschwindigkeit erzielt. Es kam zu einer massiven Rissbildung aufgrund der Legierungszusammensetzung in der Schmelze.

Bei allen Versuchen zeigt das Schiffbild der Schweißnaht eine goldene Färbung und unterscheidet sich deutlich vom rötlichen Kupfer und silbernen Aluminium, was auf eine ausreichende Vermischung bei der Legierungsbildung hindeutet.

Die meisten Risse wurden bei nicht ausreichender Schweißnahttiefe in das untere Kupferelement (**Fig.1****,** Pos.2) hinein beobachtet. Bei den vorgenannten Abmessungen ist eine ausreichende Schweißnahttiefe dann erreicht, wenn die Schweißnaht sich mindestens 0,3 bis 0,4mm, d.h. mindestens das eineinhalb bis zweigfache der Aluminiumschichtdicke in das untere Kupferelement hinein erstreckt. Damit bilden sich Legierungen mit einem hinreichend hohen Kupfergehalt. Alle diese Nähte sind ab dieser Schweißnahttiefe riss-frei.

Die Einschweißtiefe ist von der Schweißgeschwindigkeit, der Ablenkfrequenz, der Scanbreite, und der Laserleistung abhängig. Bei vorgenannten Versuchen wurden rissarme oder rissfreie Schweißnähte konkret bei erhöhten Ablenkfrequenzen vorzugsweise bis 300Hz, geringeren Scanbreiten von maximal 2mm und geringeren Schweißgeschwindigkeiten von maximal 1,5m/min erzielt, während die Laserlichtleistung im Bereich zwischen P = 1,5 und 2,5kW keinen signifikanten Einfluss auf die Rissigkeit und die Einschweißtiefe zu haben schien. Scanbreite und Einschweißtiefe bestimmen zudem den Al-Gehalt in der entstehenden Schmelze.

Die Einschweißtiefe in das untere Kupferelement hat einen signifikanten Einfluss auf den Kupfergehalt in der sich bildenden Schmelze. Risse treten insbesondere in Kupfer-ärmeren Bereichen auf.

Bei einer vorgenannten Schweißgeschwindigkeit von 3m/min bilden sich grobe intermetallische Phasen und Risse in der Schweißzone. Eine Laserstrahlleistung von 2kW reicht offenbar nicht aus, um bei einer Scanbreite von 2,5mm Material bis zu einer ausreichenden Tiefe aufzuschmelzen und damit einen hohen Kupfergehalt in der Schmelze zu erzielen. Der Übergang zu der Al-Matrix endet, bedingt durch die höhere Schweißgeschwindigkeit, in einer feinteiligen aber schmalen Diffusionszone.

Wird die Schweißgeschwindigkeit auf 1,5m/min halbiert, führt dies zu einer Verdoppelung der spezifischen Streckenenergie und damit zu einer deutlich größeren Reichweite der Diffusion von Kupfer in Aluminium. Während die Morphologie am Übergang vom Schmelzbad dendritische Wachstumsstrukturen zeigt, bildet sich am Übergang zum Aluminium eine netzartige Struktur aus. Die morphologischen und stofflichen Untersuchungen wurden mittels Rasterelektronenmikroskop (REM, JEOL 6300) und energiedispersiver Röntgenspektroskopie (EDX, SUTW-Detektor Fa. EDAX, Anregungsspannung: 20keV, Arbeitsabstand: 17mm, Messzeit: 1min) durchgeführt. Diese Strukturen unterscheiden sich im Lichtmikroskop durch unterschiedliche Grauwerte auf dem geätzten Schliffbild. Unter der Annahme, dass beim Schweißvorgang verschiedene (intermetallische) Phasen gebildet werden, führt die feine Verästelung in die Al-Matrix auf einer kleineren Größenskala zu einer guten Verankerung in der duktilen Al-Matrix mit Reduktion der Rissgefahr.

Eine auf 1,5kW reduzierte Laserstrahlleistung wird durch die mit 2mm geringere Scanbreite und die auf 1,5m/min halbierte Schweißgeschwindigkeit mehr als ausgeglichen. Die Folge ist eine deutlich größere Einschweißtiefe in das Kupferelement hinein und eine kupferreichere Schmelzzusammensetzung.

Im Übergangsbereich zwischen Schweißnaht und Aluminiumlage wurde eine Zusammensetzung von ca. 80at-% Cu und 16,9at-% Al nachgewiesen. Dies liegt im binären Phasendiagramm gem. **Fig.2** an der Grenze des Cu-reichen Mischkristallgebietes, d.h. es liegt keine intermetallische Phase mit einer erhöhten Sprödigkeit vor. Der Nickelgehalt ist hierbei vernachlässigbar (vgl. **Fig.3**)**.**

Zusammensetzung in der dendritenartigen Zone am Übergang vom kupferreichen Schmelzbad in die Aluminiumlage weist gemäß von EDX-Messungen mit 22 at-% Aluminium und 44 at-% Kupfer ein Verhältnis von 1:2 auf, was auf die spröde intermetallische Θ-Phase hindeutet (vgl. **Fig.2**). Der Sauerstoffgehalt ist mit 33 at-% allerdings sehr hoch. Unterstellt man, dass eine ausreichende Schutzgasatmosphäre beim Schweißen vorlag, muss der Sauerstoffanteil aus den Passivschichten der Al- und Cu- Materialien stammen. Der Ni-Gehalt an dieser Stelle ist vernachlässigbar (vgl. **Fig.3**).

In der Randzone der Schweißung in die Aluminiumlage hinein wurden 11 at-% Aluminium und 52 at-% Kupfer und mithin ein Atomverhältnis von 1:5 gemessen, was auf eine Zusammensetzung nahe dem Eutektikum hindeutet (**Fig.2**). Auch in diesem Bereich ist der Sauerstoffgehalt sehr hoch und der Ni-Gehalt vernachlässigbar (vgl. **Fig.3**).

Im Innern der Schweißnaht zum kupferreichen Bereich hin liegt ein Atomverhältnis Al: Cu von 40:57 vor, was auf die intermetallischen ζ2- und η2-Phasen hindeutet (**Fig.2**). In einem noch kupferreicheren inneren Bereich wurde ein Atomverhältnis Al:Cu von 11:84 gemessen, was auf die α2-Phase deutet (**Fig.2**). Diese Bereiche sind sauerstofffrei oder sauerstoffarm, der Ni-Gehalt vernachlässigbar (vgl. **Fig.3**).

### Literatur:

[1] DE 10 2004 009 651 B4
[2] binaries Phasendiagramm Al-Cu:
   http://antipasto.union.edu/engineering/Archives/SeniorProje cts/2006/ME.2006/agostina/photos%20from%20project/photopage s/photo01.htm (Stand 28.07.2014)
[3] Landolt-Börnstein, New Series IV/11A2:
   http://beta.springermaterials.com/docs/pdf/10915967 7.html? queryterms=%2al-cu-ni%22 (Stand: 28.07.2014)

### Bezugszeichenliste:

- 1: Aluminiumblech
- 2: Kupferplatte
- 3: Kupferblech
- 4: Schweißnaht
- 5: Nickelbeschichtung
- 6: Laserstrahlung

## Patentansprüche

1. Stoffschlüssige Verbindung zwischen Aluminium und Kupfer, umfassend einen Schichtverbund aus einem Kupferelement **(2),** einer Aluminiumschicht **(1)** und einer auf dieser aufliegenden Kupferschicht **(3)** in der genannten Reihenfolge,
**dadurch gekennzeichnet, dass**
die Verbindung mindestens eine Schweißnaht **(4)** auf der Kupferschicht umfasst, wobei sich die Schweißnaht durch die Kupferschicht und die Aluminiumschicht in das Kupfer-element erstreckt.

2. Stoffschlüssige Verbindung nach Anspruch 1, **dadurch gekennzeichnet, dass** die Aluminiumschicht **(1)** ein Aluminiumblech und / oder die Kupferschicht **(3)** eine Folie oder eine Schichtung auf der Aluminiumschicht ist.

3. Stoffschlüssige Verbindung nach Anspruch 1 oder 2, umfassend eine weitere Schicht **(5)** aus Nickel auf der Kupferschicht **(3)** abseits der Aluminiumschicht.

4. Stoffschlüssige Verbindung nach einem der vorgenannten Ansprüche, **dadurch gekennzeichnet, dass** die Schweißnaht **(4)** auf der Kupferschicht **(3)** sich über eine Schweißlinie erstreckt.

5. Stoffschlüssige Verbindung nach Anspruch 4, **dadurch gekennzeichnet, dass** die Schweißlinie einer zyklischen Linie um einer Mittellinie folgt.

6. Verfahren zur Herstellung einer stoffschlüssigen Verbindung zwischen Aluminium und Kupfer, umfassend die folgenden Verfahrensschritte:
a) Bereitstellung eines Kupferelements **(2),** einer Aluminiumschicht **(1)** und einer Kupferschicht **(3),**
b) Auflegen der Aluminiumschicht auf das Kupferelement und der Kupferschicht auf die Aluminiumschicht zu einem Schichtverbund, **gekennzeichnet durch**:
c) Lokales Verschweißen von Kupferelement, Aluminiumschicht und Kupferschicht unter Einwirkung einer Wärmequelle **(6)** unter Bildung einer Schweißnaht **(4),** die sich durch die Kupferschicht und die Aluminiumschicht in das Kupferelement erstreckt, wobei die Wärmequelle auf die Kupferschicht einwirkt.

7. Verfahren nach Anspruch 6, **dadurch gekennzeichnet, dass** die Wärmequelle durch einen Laserstrahl **(6)** gebildet wird.

8. Verfahren nach Anspruch 6 oder 7, **dadurch gekennzeichnet, dass** das lokale Verschweißen durch ein serielles Einwirken der Wärmequelle entlang einer Schweißlinie auf der Kupferschicht erfolgt, wobei die Schweißnaht der Schweißlinie folgt.

9. Verfahren nach Anspruch 6, **dadurch gekennzeichnet, dass** die Wärmequelle um eine Mittellinie auf der Kupferschicht mit zyklischer Ablenkfrequenz zwischen 150 und 500Hz unter Bildung einer periodischen Ausgestaltung der Schweißlinie oszilliert.

10. Verfahren nach einem der Ansprüche 6 bis 9, **dadurch gekennzeichnet, dass** die Wärmequelle gepulst auf die Kupferschicht einwirkt

## Claims

1. Strong connection between aluminium and copper, comprising a multilayer bond made up of a copper element (2), an aluminium layer (1) and, lying on the latter, a copper layer (3) in the said order,
**characterised in that** the connection comprises at least one weld seam (4) on the copper layer, with the weld seam extending through the copper layer and the aluminium layer into the copper element.

2. The strong connection of claim 1 **characterised in that** the aluminium layer (1) is an aluminium sheet and/or the copper layer (3) is a film or a lamination on the aluminium layer.

3. The strong connection of claim 1 or 2 comprising a further layer (5) of nickel on the copper layer (3) beside the aluminium layer.

4. The strong connection of any one of the preceding claims **characterised in that** the weld seam (4) on the copper layer (3) extends over a welding line.

5. The strong connection of claim 4 **characterised in that** the welding line follows a cyclical line around a centreline.

6. Method for producing a strong connection between aluminium and copper, comprising the following steps:
a) providing a copper element (2), an aluminium layer (1) and a copper layer (3),
b) placing the aluminium layer onto the copper element and the copper layer onto the aluminium layer to create a multilayer bond, **characterised by**:
c) local welding of copper element, aluminium layer and copper layer under the action of a heat source (6) while forming a weld seam (4) which extends through the copper layer and the aluminium layer into the copper element, with the heat source acting on the copper layer.

7. The method of claim 6 **characterised in that** the heat source is formed by a laser beam (6).

8. The method of claim 6 or 7 **characterised in that** the local welding is effected by a serial acting of the heat source along a welding line on the copper layer, with the weld seam following the welding line.

9. The method of claim 6 **characterised in that** the heat source oscillates about a centreline on the copper layer with a cyclical sweep frequency between 150 and 500Hz while forming a periodic configuration of the welding line.

10. The method of any one of claims 6 to 9 **characterised in that** the action of the heat source on the copper layer is pulsed.

## Revendications

1. Liaison par la matière entre de l'aluminium et du fer comprenant un composite stratifié constitué par un élément en cuivre (2), une couche d'aluminium (1) et une couche de cuivre (3) appliquée sur celle-ci, dans l'ordre susmentionné,
**caractérisé en ce que**
la liaison comprend au moins un cordon de soudure (4) sur la couche de cuivre, ce cordon de soudure s'étendant dans l'élément en cuivre au travers de la couche de cuivre et de la couche d'aluminium.

2. Liaison par la matière conforme à la revendication 1,
**caractérisé en ce que**
la couche d'aluminium (1) est une tôle d'aluminium et/ou la couche de cuivre (3) est un film ou un feuilletage appliqué sur la couche d'aluminium.

3. Liaison par la matière conforme à la revendication 1 ou 2, comprenant une autre couche (5) en nickel appliquée sur la couche de cuivre (3) à l'opposé de la couche d'aluminium.

4. Liaison par la matière conforme à l'une des revendications précédentes,
**caractérisé en ce que**
le cordon de soudure (4) de la couche de cuivre (3) s'étend sur une ligne de soudage.

5. Liaison par la matière conforme à la revendication 4,
**caractérisé en ce que**
la ligne de soudage suit une ligne cyclique autour d'une ligne médiane.

6. Procédé d'obtention d'une liaison par la matière entre de l'aluminium et du cuivre comprenant les étapes suivantes consistant à :
a) préparer un élément en cuivre (2), une couche d'aluminium (1) et une couche de cuivre (3),
b) appliquer la couche d'aluminium sur l'élément en cuivre et la couche de cuivre sur la couche d'aluminium pour obtenir un composite stratifié,
**caractérisé par**
une étape consistant à souder localement l'élément en cuivre, la couche d'aluminium et la couche de cuivre sous l'action d'une source de chaleur (6) en formant un cordon de soudure (4) s'étendant dans l'élément en cuivre au travers de la couche de cuivre et de la couche d'aluminium, la source de chaleur agissant sur la couche de cuivre.

7. Procédé conforme à la revendication 6,
**caractérisé en ce que**
la source de chaleur est formée par un faisceau laser (6).

8. Procédé conforme à la revendication 6 ou 7,
**caractérisé en ce que**
le soudage local est effectué par l'action en série de la source de chaleur le long d'une ligne de soudage sur la couche de cuivre, le cordon de soudure suivant la ligne de soudage.

9. Procédé conforme à la revendication 6,
**caractérisé en ce que**
la source de chaleur oscille autour d'une ligne médiane sur la couche de cuivre avec une fréquence de déviation cyclique comprise entre 150 et 500 Hz en formant une configuration périodique de la ligne de soudage.

10. Procédé conforme à l'une des revendications 6 à 9,
**caractérisé en ce que**
la source de chaleur agit de manière pulsée sur la couche de cuivre.
